Europäisches Patentamt

European Patent Office

Office européen des brevets

(11) Veröffentlichungsnummer: **0 360 751 B1**

# EUROPÄISCHE PATENTSCHRIFT

(45) Veröffentlichungstag der Patentschrift: **29.09.93**

(21) Anmeldenummer: **89810686.9**

(22) Anmeldetag: **14.09.89**

(51) Int. Cl.⁵: **G03B 27/73**

(54) Belichtungssteuerungsverfahren und fotografisches Farbkopiergerät.

(30) Priorität: **23.09.88 CH 3541/88**

(43) Veröffentlichungstag der Anmeldung:
**28.03.90 Patentblatt 90/13**

(45) Bekanntmachung des Hinweises auf die
Patenterteilung:
**29.09.93 Patentblatt 93/39**

(84) Benannte Vertragsstaaten:
**CH DE FR GB IT LI**

(56) Entgegenhaltungen:
**DE-A- 1 597 066**
**DE-A- 3 223 299**
**DE-A- 3 412 881**
**US-A- 4 092 067**
**US-A- 4 668 082**

(73) Patentinhaber: **GRETAG IMAGING AG**
**Althardstrasse 70**
**CH-8105 Regensdorf(CH)**

(72) Erfinder: **Kraft, Walter, Dr.**
**Appenzellerstrasse 57**
**CH-8049 Zürich(CH)**
Erfinder: **Ritter von Stein, Werner, Dr.**
**Mispelweg 20**
**D-2000 Hamburg 71(DE)**

(74) Vertreter: **Kleewein, Walter, Dr. et al**
**Patentabteilung CIBA-GEIGY AG Postfach**
**CH-4002 Basel (CH)**

**Beschreibung**

Die Erfindung betrifft ein Verfahren zur Steuerung der Belichtung in einem fotografischen Farbkopiergerät gemäss dem Oberbegriff von Patentanspruch 1 sowie ein entsprechendes fotografisches Farbkopiergerät gemäss dem Oberbegriff von Patentanspruch 12.

Seit der Einführung der ersten mit Farbscanner ausgerüsteten Fotoprinter hat auf dem Gebiet der fotoelektrischen Sensoren eine enorme Entwicklung in Richtung immer höher integrierter und billigerer Bauelemente stattgefunden. Vor allem die Entwicklung im Bereich der CCD-Sensoren (CCD = Charge-Coupled-Devices) hat dazu geführt, dass Sensoren mit einer örtlichen Auflösung, die weit über derjenigen liegt, die im Falle eines Hochleistungsprinters mit vertretbarem Aufwand an Rechenzeit bzw. Rechenleistung verarbeitet werden kann, preislich gleich oder sogar billiger zu stehen kommen als Sensoren, die eine der Aufgabe angepasste Auflösung besitzen (z.B. Diodenarrays). Es ist deshalb rein schon aus Kostengründen denkbar, dass für einen Scanner ein hochauflösender (z.B. CCD-) Sensor verwendet wird, dessen effektive Auflösung durch Zusammenfassung (Mittelung) der Messwerte örtlich benachbarter (bezogen auf die ausgemessene Vorlage) Messpunkte auf ein Mass reduziert wird, das eine Weiterverarbeitung der anfallenden Datenmenge mit vertretbarem Aufwand erlaubt.

Bei der Herstellung von Farbkopien gibt es "klassische" Problemfälle, bei denen selbst die neuesten, auf einer relativ hohen Scannerauflösung (ca. 1000 Messpunkte pro Negativ) beruhenden Verfahren der Dichte- und Farbkorrektur ganz oder teilweise versagen.

So werden z.B. Aufnahmen mit hellen Himmelpartien häufig zu dunkel kopiert. In US-A-4 279 505 wird zwar ein Verfahren beschrieben, wie man Bildbereiche erkennen kann, die mit einer gewissen Wahrscheinlichkeit Himmelbereiche sein könnten, um dieses Problem teilweise zu beheben, jedoch ist auch dieses Verfahren noch verbesserungsfähig. Ein weiteres Problem besteht in der Unterscheidung zwischen Blitzaufnahmen und einer Klasse von Gegenlichtaufnahmen (Strassenschluchten, Torbögen, etc.). In beiden Fällen weist das Negativ häufig einen mehr oder weniger zentralen Bereich hoher Dichte auf. Beide Klassen von Aufnahmen erfahren deshalb bei den bekannten Verfahren zur Belichtungssteuerung häufig eine gleichsinnige Dichtekorrektur, obwohl sie gerade entgegengesetzt behandelt werden müssten ("Plus-Korrektur", d.h. höhere Dichte im Falle von Blitzaufnahmen, "Minus-Korrektur" im Falle der erwähnten Gegenlichtaufnahmen). Eine bessere Erkennung von Himmelbereichen würde sich auch in farblicher Hinsicht positiv auswirken, beispielsweise bei Strandaufnahmen, die häufig zu gelb kopiert werden, falls Messpunkte aus diesen Bereichen in die Korrektur einfliessen.

Im Prinzip genau dasselbe Problem wie im Falle von Aufnahmen mit Himmelpartien stellt sich bei Schneeaufnahmen. Auch hier wäre noch eine Verbesserung der Dichtekorrektur erstrebenswert.

Amateuraufnahmen entstehen häufig unter nicht-idealen Beleuchtungsbedingungen. Dies gilt insbesondere für Innenaufnahmen bei Glühlampenlicht. Die meisten Verfahren zur Belichtungssteuerung beinhalten besondere jMassnahmen zur Kunstlichtkorrektur (siehe z.B. die Bedienungsanleitung zu den GRETAG Hochleistungsprintern 3139..3142), ohne welche die genannte Klasse von Bildern mit einem ausgeprägten Gelbstich kopiert würde. Diese Massnahmen wirken sich jedoch häufig negativ auf Bilder aus, die nicht unter Glühlampenlicht entstanden sind, die sich jedoch farblich kaum von solchen unterscheiden lassen. Ein typisches Beispiel für Fälle, die zu solchen Fehlkorrekturen führen, sind Herbst-Aussenaufnahmen mit Laub, Kornfeldern usw.

Die zweite wichtige Klasse von Kunstlichtaufnahmen sind die sog. Neonlichtaufnahmen. Es handelt sich auch hier vorwiegend um Innenaufnahmen, die aufgrund der nicht-idealen Beleuchtung zumeist mit einem ausgeprägten Grünstich kopiert werden. Es stellen sich im Falle der Kunstlichtkorrektur bei Neonlichtaufnahmen analoge Probleme wie im Falle von Glühlampenlichtaufnahmen. Die Schwierigkeit besteht hier darin, dass rein aufgrund farblicher Kriterien eine Unterscheidung zwischen Neonaufnahmen und Aussenaufnahmen mit grüner Vegetation nicht mit der wünschbaren Genauigkeit möglich ist.

Das bei der Farb- und Dichtekorrektur bei fotografischen Printern zu lösende Problem kann generell wie folgt aufgefasst werden: Zunächst müssen die bildwichtigen Teile einer Vorlage identifiziert werden und anschliessend müssen die Kopierlichtmengen so bemessen werden, dass diese bildwichtigen Bereiche bezüglich Farbe und Dichte richtig auf dem Kopiermaterial wiedergegeben werden.

So wird z.B. in US-A-4,668,082 und DE-A-35 43 076 ein Verfahren beschrieben, bei welchem die bildwichtigen Teile der Vorlage von einer Bedienungsperson identifiziert werden, die eigentliche Bestimmung der Belichtungsparameter jedoch von einem Rechner durchgeführt wird aufgrund der gemessenen Transmissionswerte der Vorlage unter Mitberücksichtigung der von der Bedienungsperson gelieferten zusätzlichen Information. Ein solches Verfahren kommt natürlich bei Hochleistungsprintern nicht in Frage.

Aus der DE-A-1597066 ist schliesslich ein Verfahren bekannt, bei dem aus der Vorlage ein etwa 1/4 bis 1/6 der Vorlagenfläche umfassender Bereich herausgesucht wird, dessen mittlerer Kontrast am grössten ist.

Von diesem Bereich allein werden dann die drei integralen Farbdichten bestimmt und für die Berechnung der Kopierlichtmengen ausgewertet. Dieses bekannte Verfahren arbeitet noch mit integraler Messung und ist schon allein deshalb den extremen Qualitätsanforderungen moderner Hochleistungsprinter nicht gewachsen. Ausserdem führt die totale Unterdrückung von Vorlagenbereichen geringeren mittleren Kontrasts ebenfalls nicht zu optimalen Kopien.

Durch die vorliegende Erfindung sollen nun diese Schwierigkeiten behoben und die Voraussetzungen dafür geschaffen werden, dass auch die vorstehend geschilderten klassischen Problemfälle besser in den Griff bekommen werden können.

Das erfindungsgemässe Belichtungssteuerungsverfahren und die entsprechende erfindungsgemässe Kopiervorrichtung, welche diese Aufgabe erfüllen, sind in den unabhängigen Patentansprüchen beschrieben. Bevorzugte Ausführungsbeispiele und Weiterbildungen ergeben sich aus den abhängigen Ansprüchen.

Die üblichen Farbscanner messen bekanntlicherweise die Vorlage bereichsweise in drei Farben aus, liefern also pro Bereich ein Messwert-Tripel. Die Berechnung der Belichtungsparameter erfolgt anschliessend aufgrund der über eine oder mehrere aufeinanderfolgende Vorlagen ermittelten Messwert-Tripel. Gemäss der Grundidee der vorliegenden Erfindung werden nun diese Messwert-Tripel, welche rein farbliche Information über den entsprechenden Bereich der Vorlage enthalten, durch weitere Kenngrössen erweitert, welche zusätzlich Information über den Detailkontrast der Vorlage im entsprechenden Bereich enthalten. Dank dieser Zusatzinformation lässt sich eine erhebliche Verbesserung der Farb- und Dichtekorrektur erzielen.

Mit einer der Hauptgründe, warum selbst die eingangs erwähnten, mit hochauflösenden Scannern arbeitenden Belichtungssteuerungsverfahren zumindest teilweise versagen, ist der Mangel an Information über die Feinstruktur der Vorlage. Die erfindungsgemässe Miteinbeziehung des Detailkontrasts schafft dagegen eine deutliche Verbesserung in vielen der genannten klassischen Problemfälle. So ist auf diese Weise z.B. eine wesentlich bessere Erkennung von Himmelsbereichen und eine wesentlich verbesserte Unterscheidung zwischen Blitzaufnahmen und bestimmten Gegenlichtaufnahmen möglich. Auch bei Schneeaufnahmen ist der Miteinbezug des Detailkontrasts von Vorteil. Bei Kunstlichtaufnahmen lassen sich Fehlkorrekturen ebenfalls wesentlich reduzieren, wenn zusätzlich zu den üblichen Kriterien bei der Kunstlichtkorrektur auch Information über den Detailkontrast miteinbezogen wird: Innenaufnahmen weisen häufig kontrastarme Flächen auf (z.B. eine Wand im Hintergrund), während sich die Aufnahme z.B. eines herbstlichen Waldes im allgemeinen in der Blaudichte durch einen ausgeprägten Detailkontrast auszeichnet. Auch bei Neonlichtaufnahmen ist das erfindungsgemässe Verfahren einsetzbar und von Vorteil.

Die erfindungsgemässe Analyse des Detailkontrasts ist insbesondere auch bei der eingangs erwähnten Identifikation von bildwichtigen Bereichen der Vorlage nützlich. Dabei kann von der Tatsache ausgegangen werden, dass bildwichtige Teile einer Vorlage (bei einer Blitzaufnahme z.B. ein Gesicht) im allgemeinen einen deutlich höheren Detailkontrast aufweisen als bildunwichtige Teile (bei einer Blitzaufnahme z.B. eine Wand im Hintergrund, bei einer Aussenaufnahme z.B. der Himmel).

Ausserdem kann die Kenntnis des Detailkontrasts nutzbringend für eine Verbesserung der Erkennung kopierunwürdiger Vorlagen, wie sie in einigen modernen Printern bereits durchgeführt wird (siehe z.B: GRETAG Printer 3139... 3142), eingesetzt werden, wobei von der Erfahrungstatsache ausgegangen werden kann, dass Vorlagen mit durchwegs geringem Detailkontrast nur selten einen interessanten Bildinhalt aufweisen.

Im folgenden wird die Erfindung anhand der Zeichnung naher erläutert. Es zeigen:

Fig. 1    eine Skizze zur Erläuterung der hochauflösenden Abtastung der Vorlage,

Fig. 2    ein praktisches Ausführungsbeispiel einer geeigneten hochauflösenden Abtastvorrichtung,

Fig. 3    eine Skizze analog Fig. 1 zur Erläuterung der Funktionsweise der Abtastvorrichtung nach Fig. 2,

Fig. 4    ein Blockschema einer elektronischen Schaltung zur Messwert-Verarbeitung,

Fig. 5    eine Skizze zur Erläuterung des erfindungsgemässen Belichtungssteuerungsverfahrens und

Fig. 6    eine Prinzipskizze eines erfindungsgemässen Farbkopiergeräts.

Das erfindungsgemässe Farbkopiergerät kann - bis auf die noch zu erklärenden Unterschiede in der Messanordnung für die Kopiervorlagen und in der Verarbeitung der Messwerte für die Belichtungssteuerung - gleich aufgebaut sein wie herkömmliche Geräte dieser Art, beispielsweise etwa die weltweit eingesetzten Hochleistungsprinter Modelle Nos. 3139, 3140, 3141 oder 3142 der Anmelderin, welche u.a. in US-A-4 092 067, 4 101 216 und 4 279 505 ausführlich beschrieben sind. Diese Druckschriften sowie die Bedienungsanleitungen zu den genannten Hochleistungsprintern werden daher ausdrücklich zum integrierten Bestandteil der vorliegenden Beschreibung erklärt.

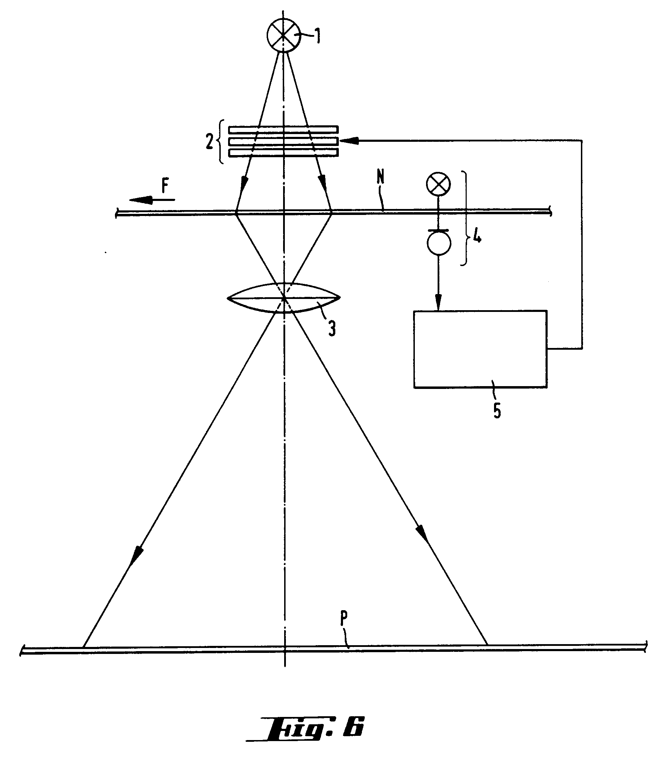

Fig. 6 zeigt schematisch die wesentlichsten, für das Verständnis der Erfindung notwendigen Komponenten eines solchen Farbkopiergeräts. Es umfasst eine Kopierlichtquelle 1, einen Satz servogesteuerter

EP 0 360 751 B1

Farbverschlüsse 2, eine Abbildungsoptik 3, eine durch eine Messlichtquelle und einen Fotoempfänger symbolisch angedeutete fotoelektrische Messanordnung 4 und eine elektronische Belichtungssteuerug 5. Die mit von der Kopierlichtquelle 1 kommendem Licht beaufschlagte Kopiervorlage N wird mittels der Optik 3 auf lichtempfindliches Kopiermaterial P abgebildet, wobei die Kopierlichtmengen für die einzelnen Teilbelichtungen aufgrund einer vorgängigen bereichsweisen fotoelektrischen Ausmessung und Messwertanalyse der Kopiervorlage von der Belichtungssteuerung 5 ermittelt und über die Farbverschlüsse 2 gesteuert werden.

Wie schon erwähnt, werden aufgrund der fotoelektrischen Abtastung der Kopiervorlage für jeden Abtastbereich (die Kopiervorlage kann beispielsweise in etwa 1000-2000 solcher Abtastbereiche eingeteilt sein) ein die drei Farbtransmissionen oder Farbdichten des Abtastbereichs repräsentierendes Messwert-Tripel sowie wenigstens ein den Detailkontrast innerhalb des Abtastbereichs beschreibender oder ein Mass für diesen bildender Detailkontrast-Kennwert bestimmt. Die Gesamtheit aller dieser zu einem Abtastbereich gehörenden Grössen, also das Messwert-Tripel und der oder die Detailkontrast-Kennwert(e) werden im folgenden als Messtupel bezeichnet.

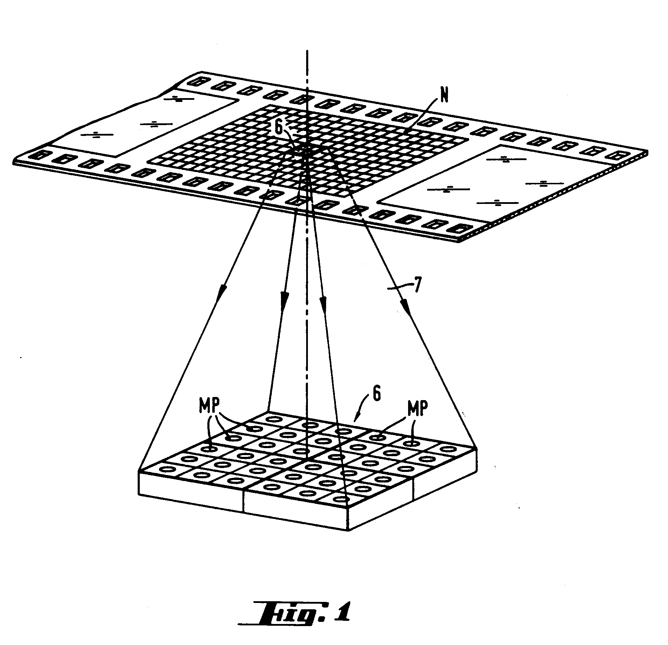

Ein mögliches Verfahren zur Gewinnung eines solchen erweiterten Messtupels besteht gemäss Fig. 1 darin, die Ausmessung der Kopiervorlagen mit einer höheren als der Anzahl Abtastbereiche entsprechenden örtlichen Auflösung vorzunehmen ("punktweise" Abtastung), diese hohe Auflösung durch die Zusammenfassung ()Mittelung) örtlich benachbarter Messtripel der Vorlage soweit zu reduzieren (Abtastpunkte zu Abtastbereichen zusammenzufassen), dass die Berechnung der Belichtungsparameter (aufgrund der reduzierten Datenmenge) mit vertretbarem Aufwand (bezüglich Rechenzeit und erforderlicher Rechnerleistung) durchgeführt werden kann, wobei die Detailkontrast-Kennwerte aus den Messtripeln hoher Auflösung ermittelt werden.

Als mögliche den Detailkontrast beschreibende Kenngrössen $K_i$ können z.B. die in den drei Farben ermittelten Differenzen zwischen der maximalen und der minimalen Dichte der zusammenzufassenden Messpunkte verwendet werden:

$$K_i \;=\; \mathrm{Max}(D_{ij}) \;-\; \mathrm{Min}(D_{ij}) \qquad (I)$$
$$j = 1 \ldots N \qquad j = 1 \ldots N$$

i = blau, grün, rot
N = Anzahl der zusammenzufassenden Messpunkte
$D_{ij}$ = Dichte in der Farbe i des j-ten Messpunktes

Um nicht die Gesamtheit der feinaufgelösten Messtripel speichern und anschliessend mittels eines Rechners bezüglich Detailkontrast untersuchen und auf eine geringere Auflösung umrechnen zu müssen, erfolgt die Zusammenfassung benachbarter Messpunkte und die Ermittlung der Detailkontrast-Kennwerte $K_i$ mit Vorteil simultan zum Messvorgang, d.h. während die Messdaten des Scanners anfallen, so dass unmittelbar nach der Abtastung der gesamten Vorlage auch die Gesamtheit der für die Farb- und Dichtekorrektur erforderlichen Messtupel zur Verfügung steht. Dass dies mit einfachen Mitteln möglich ist, geht aus der anschliessenden Beschreibung einer bevorzugten Ausführung hervor.

Bei einer einfacheren Variante des Verfahrens kann anstelle von drei Detailkontrast-Kennwerten $K_i$ auch ein einziger Kennwert K verwendet werden, welcher z.B nach einer der Formeln

$$K \;=\; \sum_i g_i \cdot K_i \qquad (II)$$

oder

K = Max ($K_i$) (i = rot, blau, grün)     (III)

oder

4

$$K = \underset{j=1\ldots N}{\text{Max}} \left( \sum_i f_i \cdot D_{ij} \right) - \underset{j=1\ldots N}{\text{Min}} \left( \sum f_i \cdot D_{ij} \right) \quad (\text{IV})$$

(wobei b blau, g = grün, r = rot) berechnet werden kann. Die Faktoren $g_i$ und $f_i$ sind dabei positive Gewichtsfaktoren, die sich zu 1 addieren, $K_i$ die gemäss der vorangehenden Formel (I) bestimmten Detailkontrast-Werte.

Ausserdem könnte als Mass für den farblichen Detailkontrast (ev. in Verbindung mit (IV), das bei geeigneter Wahl der Koeffizienten $f_i$ als Mass für den Neutraldichtekontrast betrachtet werden kann,) z.B. die folgende Grösse verwendet werden:

$$K = \underset{j=1\ldots N}{\text{Max}} \left( \left| D_{b,j} - D_{g,j} \right| + \left| D_{r,j} - D_{g,j} \right| \right) \quad (\text{V})$$

worin N die Anzahl der Messpunkte pro Abtastbereich ist und $D_{b,j}$, $D_{g,j}$ und $D_{r,j}$ die Dichten des j-ten Messpunktes in den Farben blau bzw. grün bzw. rot bedeuten.

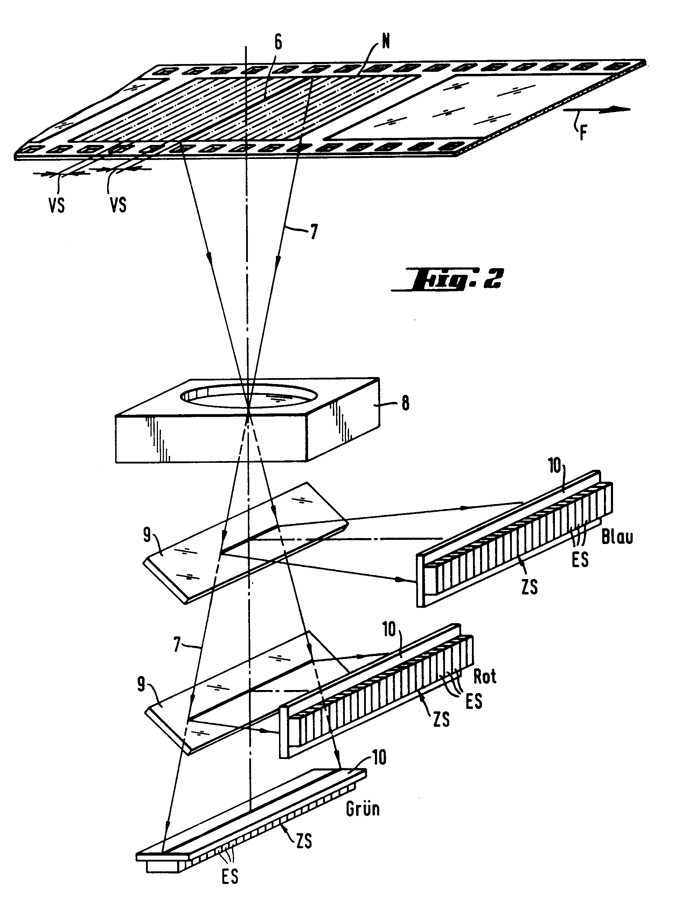

In Fig. 2 ist eine an sich bekannte mögliche Anordnung zur hochauflösenden Abtastung einer Filmvorlage schematisch dargestellt. Die Vorlage wird dabei mit in der Figur nicht eingetragenen Mitteln schrittweise in Richtung des Pfeiles vorgeschoben, wobei jeweils ein streifenförmiger Bereich mit Messlicht beaufschlagt und über eine Optik und ein Farbteilungsprisma deckungsgleich auf drei Zeilensensoren abgebildet wird. Mittels des Farbteilers und den Messzeilen vorgeschalteten Farbfiltern wird erreicht, dass jede der Messzeilen in ihrem Spektralbereich (blau, grün rot) mit einer geeigneten spektralen Empfindlichkeit auf das einfallende Licht reagiert. Bei dieser Anordnung ist die örtliche Auflösung quer zur Vorschubrichtung durch die Anzahl Einzelsensoren der drei Messzeilen (beispielsweise 128 oder 256 Sensoren) bestimmt, die Auflösung in Vorschubrichtung durch die Grösse des Vorschubschrittes, mit welchem die Vorlage bewegt wird bzw. durch die Geometrie der Zeilensensors bei grossen Vorschubschritten. Vorzugsweise werden integrierende Zeilensensoren verwendet, welche während des Vorschubs messen und integrieren.

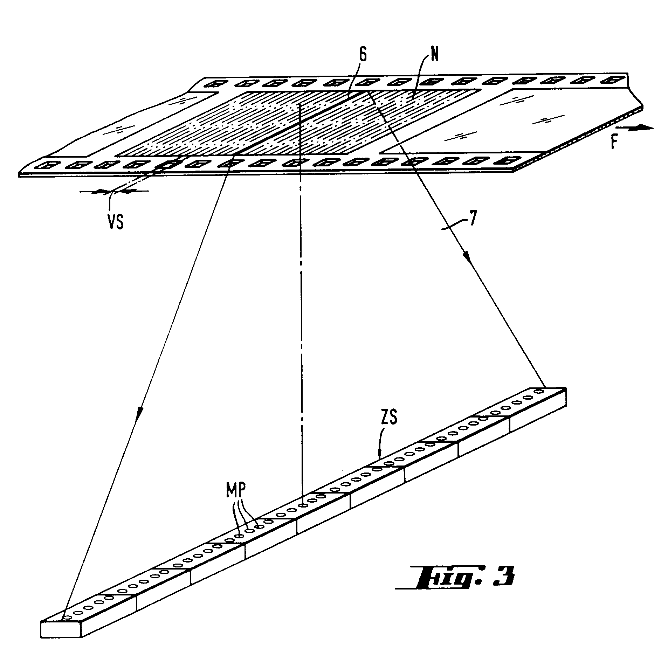

Um die Messzeit für ein Vorlagenbild gering zu halten, wird in diesem Beispiel die Grösse des Vorschubschrittes so gewählt, dass damit gerade die gröbere Auflösung resultiert, wie sie für die Weiterverarbeitung der Daten gewünscht wird (beispielsweise 36 Zeilen pro Bild). Bei dieser Wahl stark unterschiedlicher Auflösungen in den beiden Richtungen werden bei der Zusammenfassung von Messwerten und der Bestimmung des Detailkontrastes nur Messpunkte, die jeweils derselben Vorlagenzeile entstammen, verwendet (Fig. 3). Ein gewisser Nachteil dieser speziellen Lösung ist natürlich der, dass der Detailkontrast nur in einer Richtung erfasst wird. Eine Bildkante, welche quer zur Vorschubrichtung verläuft, kann zum Beispiel nicht erkannt werden. Im Falle eines Hochleistungsprinters wird dieser Nachteil jedoch durch die geringere Messzeit wieder aufgewogen.

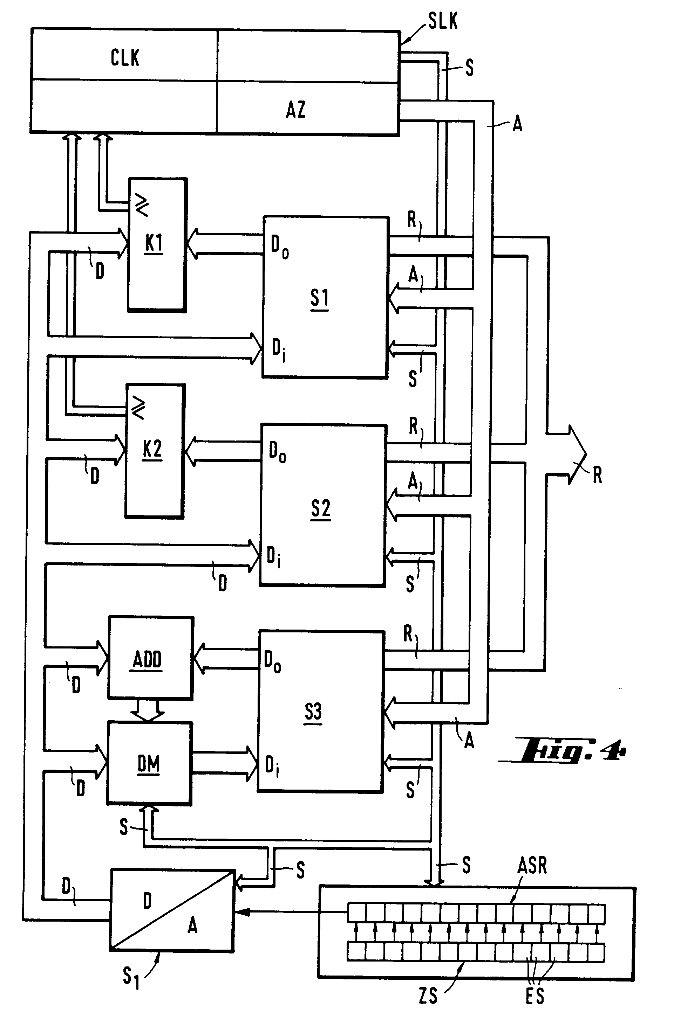

Fig. 4 zeigt das Blockschema einer Schaltung, mit welcher die Zusammenfassung von Messwerten und die Ermittlung von den Detailkontrast charakterisierenden Kenngrössen gemäss Formel (I) simultan zum Auslesevorgang der Messzeilen erfolgt (für jeden der drei Farbkanäle gleich wird je eine solche Schaltung verwendet).

Die einer Zeile der Vorlage entstammenden Messignale liegen im CCD-Zeilensensor zunächst in Form einzelner Ladungspakete vor, wobei jeder Einzelsensor eine Ladung liefert, die im wesentlichen proportional ist zur vom Sensor empfangenen Lichtintensität und zur Zeit (Messintervall, Integrationszeit), während der der Sensor dieser Intensität ausgesetzt ist. Diese Ladungspakete werden am Ende des Messintervalls simultan in ein analoges Schieberegister ASR umgeladen und von dort seriell zum Ausgang der Sensorzeile geführt. Im anschliessenden ersten Schaltungsblock $S_1$ werden diese Ladungspakete in bekannter Art in Spannungssignale umgewandelt, verstärkt, bezüglich Dunkelsignal korrigiert, logarithmiert, normiert und von analoger in digitale Form umgewandelt. Am Ausgang des ersten Blocks erscheinen somit, im Takte des Auslese-Steuersignals, digitale Werte (beispielsweise mit einer Auflösung von 10 bit), welche die optische Dichte der Vorlage in den von den Einzelsensoren der Zeile erfassten Bereichen darstellen.

Diese digitalen Werte werden über einen Datenbus zwei Komparatoren K1 und K2 und einem Addierwerk ADD zugeführt. Dieser Bus führt ausserdem auf die Eingänge dreier Schreib/Lesespeicher (RAM's) S1, S2 und S3, wobei die Eingänge $D_1$ des dritten RAM's mittels eines Multiplexers wahlweise auch auf die Ausgänge des Addierwerks ADD umgeschaltet werden können. Die Ausgänge der ersten zwei RAM's S1 und S2 führen je auf einen der beiden Komparatoren, diejenigen des dritten auf das Addierwerk ADD. Die drei RAM's sind ausserdem an einen gemeinsamen Adressbus A angeschlossen. Der Gesamtablauf wird über eine Steuerlogik SLK koordiniert und von einem Taktgeber CLK gesteuert. In dieser Schaltung findet nun der folgende Ablauf statt:

Zu Beginn der Ausmessung einer Vorlagenzeile wird die Steuerlogik initialisiert, insbesondere wird der in ihr enthaltene Adresszähler AZ auf Null gesetzt. Sobald der erste Messwert D einer zusammenzufassenden Gruppe am Ausgang des ersten Schaltungsblocks erscheint, wird dieser direkt in die drei RAM's eingelesen, in die Speicherzellen, die vom Adressbus A gerade angesprochen werden.

Während die weiteren Messwerte D derselben Gruppe anfallen, bleibt der Adressbus A unverändert. Am Ausgang der drei RAM's steht also immer der zuletzt in diese eingelesene Wert an.

Dieser Wert wird im Falle des ersten RAM's S1 im ersten Komparator K1 mit dem neuesten Messwert verglichen. Ist der neue Messwert grösser als der gespeicherte, so wird über den Steuerbus S bewirkt, dass der neue Messwert den alten Inhalt der adressierten Speicherzelle des ersten RAM's S1 überschreibt. Andernfalls bleibt der ursprüngliche Wert erhalten.

Im Falle des zweiten RAM's S2 erfolgt genau derselbe Vorgang mit dem Unterschied, dass der alte Wert überschrieben wird, falls er grösser als der neue Messwert ist (der Vergleich erfolgt in diesem Falle im zweiten Komparator K2). Der Ausgang des dritten RAM's S3 wird im Addierwerk ADD zum neuen Messwert addiert. Die resultierende Summe ersetzt anschliessend den vorangehenden Wert der vom Adressbus A angesprochenen Speicherzelle dieses RAM's.

Nachdem alle Messpunkte derselben Gruppe angefallen sind, enthält das erste RAM S1 den maximalen Dichtewert der Gruppe, das zweite RAM S2 den minimalen und das dritte RAM S3 die Summe der Dichtewerte der Gruppe (diese Summe, dividiert durch die Anzahl Messpunkte der Gruppe, ergibt die mittlere Dichte der Gruppe in der Farbe des Kanals, dem die Schaltung zugeordnet ist).

Anschliessend wird in der Steuerlogik SLK der Adresszähler AZ um Eins inkrementiert, und der ganze Vorgang beginnt von neuem (bei Schritt 2), wobei die sich ergebenden Werte entsprechend der inkrementierten Adresse in einem neuen Satz von Speicherzellen abgelegt werden.

Ist die gesamte Anzahl Messpunkte der Messzeile Verarbeitet worden, so wird die Vorlage in die nächste Messposition geschoben. In der Zwischenzeit werden die in den drei RAM's gespeicherten minimalen, maximalen und addierten Dichtewerte der einzelnen Messpunktgruppen für die weitere verarbeitung über den Ausgangsbus R der Schaltung ausgelesen (dazu wird der Adresszähler in der Steuerlogik zunächst auf Null zurückgesetzt und anschliessend in Einzelschritten bis zum Wert N-1 (N = Anzahl Gruppen pro Zeile) inkrementiert.

Es kann nun mit dem Auslesen und Auswerten der Messpunkte der nächsten Messzeile begonnen werden. Der ganze Vorgang startet somit von neuem bei Schritt 1.

Es bleibt noch zu erwähnen, dass die Addierung (Mittelung) von Messsignalen mehrerer Sensoren zu einer Verbesserung des Signal-zu-Rausch-Verhältnisses führt, da sich dabei die Störsignale der einzelnen Sensoren teilweise gegenseitig aufheben, die Nutzsignale hingegen addieren (M. Schwartz/ Papoulis). Eine weitere Möglichkeit zur Verbesserung des Signal-zu-Rausch-Verhältnisses kann im Falle einer CCD-Messzeile dadurch erreicht werden, dass man entweder die Intensität des Messlichts oder die Integrationszeit des Sensors der mittleren Dichte der Vorlage anpasst, so dass der Sensor immer in Umgebung eines günstigen Arbeitspunktes betrieben wird (Fairchild Weston/Schlumberger: 1987 CCD Databook).

Das oben beschriebene Ausführungsbeispiel beruht auf einem Zeilensensor als Bildaufnehmer. Es ist jedoch klar, dass die Realisierung des Prinzips weitgehend unabhängig ist vom für die Vorlagenabtastung verwendeten Verfahren.

So kann anstelle eines Zeilensensors ebensogut ein Flächensensor eingesetzt werden, mit welchem die Bildpunkte simultan ausgemessen und dann sequentiell ausgelesen werden. Das sequentielle Auslesen kann dabei z.B. zeilenweise oder auch, aufgrund einer speziellen Auslesestruktur, so erfolgen, dass die beim Uebergang auf eine niedrigere Auflösung zusammenzufassenden Messwerte zeitlich direkt aufeinanderfolgend am Ausgang des Flächensensors erscheinen.

Selbstverständlich kann das erfindungsgemässe Prinzip auch im Falle eines "Flying-Spot" Scanners mit "Punktsensoren" (EP-A- 0 103 583, WO-A- 83/02869, GB-A-1 369 864) zur Anwendung kommen.

Das oben beschriebene Ausführungsbeispiel verwendet drei getrennte Sensoren für die Ausmessung der Vorlage in drei Farben. Offensichtlich ist es auch möglich, mit einem einzigen Sensor auszukommen, der die Vorlage sequentiell in drei Farben ausmisst, oder einen Flächensensor zu verwenden, welcher Elemente unterschiedlicher spektraler Empfindlichkeit aufweist, welche so angeordnet sind, dass ein gemeinsamer Bereich der Vorlage jeweils von mindestens drei örtlich benachbarten Sensorelementen simultan im blauen, grünen und roten Wellen-längenbereich erfasst wird (DE-A- 36 04 964, US-A-4,709,259, DE-A- 36 15 342)

Das oben beschriebene Ausführungsbeispiel verwendet eine spezielle digitale Schaltung zur Zusammenfassung von Messwerten und zur Bestimmung des Detailkontrastes. Selbstverständlich können die erforderlichen Operationen auch mittels eines Mikrocomputers oder Signalprozessors (welcher auch einen Teil der weiteren Verarbeitung der Daten übernehmen könnte) durchgeführt werden. Eine solche Lösung hätte ausserdem den Vorteil einer höheren Flexibilität bezüglich Anzahl der zusammenzufassenden Messwerte, Wahl des Masses für den Detailkontrast (Formeln (I).. (V)), usw.

Beim oben beschriebene Ausführungsbeispiel werden die Messwerte in logarithmierter Form, d.h. als Dichtewerte, weiterverarbeitet. Selbstverständlich ist es auch möglich, die Weiterverarbeitung ganz oder teilweise statt mit Dichtewerten mit Intensitäts- bzw. Transmissionswerten durchzuführen. Die Charakterisierung des Detailkontrastes kann dabei wiederum anhand der Formeln (1) bis (5) erfolgen, indem man anstelle der Dichtewerte die entsprechenden Transmissions- bzw. Intensitätswerte setzt.

Das Prinzip der vorliegenden Erfindung lässt sich auch in einer Ausgestaltung realisieren, die sich speziell für (Hochleistungs-) Printer eignet, welche bereits mit einem Farbscanner niedriger bis mittlerer Auflösung ausgerüstet sind. In einem solchen Falle kann es von Vorteil sein, den bestehenden Scanner weiterhin für die Ermittlung der drei Farbwerte (Messwert-Tripel) eines Messtupels zu verwenden, die jedes Messtupel ergänzende Detailkontrastinformation hingegen mittels eines zusätzlichen hochauflösenden Mess-Systems zu gewinnen. Um den Aufwand für das zusätzliche Mess-System gering zu halten, kann man sich dabei auf eine farblich undifferenzierte Neutraldichte-Messung beschränken, welche Detailkontrastwerte liefert, die im wesentlichen den mittels Formel (IV) ermittelten entsprechen. Die den Detailkontrast beschreibenden Kenngrössen können im Prinzip mit derselben Schaltung bestimmt werden, wie sie im obigen Ausführungsbeispiel beschrieben wurde. Eine Vereinfachung ist insofern möglich, als eine Zusammenfassung örtlich benachbarter Messpunkte nicht erforderlich ist, da ja der mit geringerer Auflösung arbeitende Farbscanner im allgemeinen (aufgrund der Grösse seines Messflecks) bereits über einen grösseren Bereich der Vorlage gemittelte Messwerte liefert.

Bei der Verwendung zweier getrennter Messysteme stellt sich natürlich das Problem einer genauen Zuordnung der Messwerte des hochauflösenden Systems zu denjenigen des Systems niedrigerer Auflösung, da ja gewährleistet sein muss, dass jedes vom Farbscanner gelieferte Farbtupel (Messwert-Tripel), das einem bestimmten Bereich der Vorlage entspricht, mit dem demselben Vorlagebereich entstammenden Detailkontrastwert ergänzt wird. Eine solche Zuordnung ist jedoch im allgemeinen einfach realisierbar, insbesondere im Falle, dass beide Messysteme einen Zeilensensor verwenden, welcher die Vorlage (wie in obigem Ausführungsbeispiel erläutert) über ihre gesamte Höhe simultan abtastet. Da die relative geometrische Anordnung der beiden Systeme bekannt ist, und die zweite Dimension der örtlichen Abtastung für beide Systeme durch den Vorlagenvorschub gegeben ist, genügt es, diesen Vorschub messtechnisch zu überwachen und anhand dieser Ueberwachung den Messvorgang in beiden Systemen zu synchronisieren.

Eine Erweiterung des Messystems eines Fotoprinters mit einem hochauflösenden Sensor kann, wie aus DE-A- 26 52 287, DE-A- 26 54 943, DE-A- 34 08 765 bekannt ist, auch zum Zwecke einer Erkennung extrem unscharfer Vorlagen verwendet werden. Im Gegensatz zum hier vorgeschlagen Verfahren nutzen diese bekannten Verfahren die Möglichkeiten einer hochauflösenden Messung nur in begrenztem Masse aus; insbesondere werden die Messwerte hoher Auflösung nicht, wie hier erfindungsgemäss vorgeschlagen, für eine Verbesserung der Farb- und Dichte-Korrektur verwendet.

Dass die Verfügbarkeit von Information über die Feinstruktur der Vorlage in vielfältiger Weise ausgenutzt werden kann, um eine Verbesserung der Farb- und Dichtekorrektur zu erreichen, wurde bereits weiter oben ausführlich dargelegt. Allgemein gesagt ergibt sich dank dieser zusätzlichen Information die Möglichkeit einer gegenüber den herkömmlichen Verfahren verfeinerten Vorlagenanalyse.

Die folgenden Beispiele sollen in erster Linie zeigen, wie sich diese zusätzliche Detailkontrast-Information auf einfache und natürliche Art und Weise in die bekannten Algorithmen zur Bestimmung der Belichtungswerte (Kopierlichtmengen) in Fotoprintern einbauen lässt.

Ausgegangen wird dabei der Konkretheit halber von den in US-A- 4092067 und EP-A-4279505 sowie in den Bedienungshandbüchern der GRETAG Hochleistungsprinter 3139..3142 beschriebenen Verfahren der Farb- und Dichtekorrektur.

Bei diesen Verfahren wird die Bestimmung der Belichtungsparameter getrennt für Farbe und Dichte durchgeführt (wobei sich jedoch die Dichtekorrektur auch auf farbliche Kriterien, die Farbkorrektur auch auf Dichtekriterien stützt).

In US-A- 4092067 und US-A- 4279505 wird ein Dichte-Korrekturverfahren beschrieben, bei welchem unter anderem die Vorlage in konzentrische Bereiche aufgeteilt wird, für jede dieser Zonen aufgrund der Neutraldichtewerte (diese werden, ähnlich wie in (IV) durch Linearkombination aus den drei Farbdichtewerten berechnet) bestimmte Zwischenwerte ermittelt, und anschliessend aus diesen Zwischenwerten für die Bestimmung der Gesamtbelichtung massgebende Endwerte ermittelt werden (in US-A- 4279505 als "Basic Density Correction Value BDC" bezeichnet). In die Bestimmung dieser Endwerte fliessen dabei die Zwischenwerte der verschiedenen Zonen mit unterschiedlichen Gewichten ein. Höchstes Gewicht hat dabei die zentrale Zone, dies in Anbetracht der Tatsache, dass der bildwichtige Teil einer Vorlage am häufigsten im Zentrum anzutreffen ist.

Wie bereits erwähnt, ist jedoch auch das Vorhandensein eines relativ hohen Detailkontrastes ein Indiz dafür, dass es sich beim betrachteten Vorlagenbereich um einen bildwichtigen Teil handeln könnte. Anstelle oder ergänzend zu eine Gruppierung der Messwerte nach örtlichen Kriterien (Zoneneinteilung), ist demnach auch eine Gruppierung der (erweiterten) Messtupel aufgrund des Detailkontrastes denkbar. Im einfachsten Falle kann das so erweiterte Verfahren wie folgt durchgeführt werden (dabei wird angenommen, dass der Detailkontrast jedes Messtupels durch durch eine skalare, z.B. aufgrund der Formel (IV) ermittelte Grösse charakterisiert sei):

Zunächst wird wie in US-A- 4279505 beschrieben ein aufgrund der Zoneneinteilung gewichteter erster Endwert E1 ermittelt. In einem zweiten Schritt wird über die Gesamtheit der Messtupel der maximale Detailkontrastwert Kmax und der minimale Detailkontrastwert Kmin ermittelt. Aus diesen beiden Werten wird anschliesend ein Schwellwert Ks berechnet, z.B. als Mittelwert von Kmax und Kmin. Anschliessend wird die Gesamtheit der Messtupel in zwei Gruppen aufgeteilt, wobei der ersten Gruppe diejenigen Messtupel zugeordnet werden, für welche K < = Ks gilt, der zweiten Gruppe die verbleibenden Messtupel. Analog wie im Verfahren gemäss US-A- 4279505 werden nun für jede der zwei Gruppen Zwischenwerte ermittelt und daraus durch unterschiedliche Gewichtung der Zwischenwerte der beiden Gruppen ein zweiter Endwert E2. Das Gewicht der ersten Gruppe wird man dabei geringer wählen als dasjenige der zweiten. (An die Stelle der örtlichen Zonen treten also hier die Detailkontrast-Gruppen.) In einem dritten Schritt wird der für die Bestimmung der Gesamtbelichtung massgebende neue Endwert E als Linearkombination von E1 und E2 bestimmt:

$E = a \cdot E_1 + b \cdot E_2$ worin $a + b = 1$ und $0 \leq a,b \leq 1$ gilt.

In US-A- 4279505 wird eine Verfeinerung des Dichtekorrektur-Verfahrens beschrieben, welche, anschaulich gesagt, bezweckt, Bereiche der Vorlage, die mit einer gewissen Wahrscheinlichkeit Himmel- oder Schnee-Partien darstellen, zu isolieren und dafür zu sorgen, dass diese mit verringertem Gewicht in den für die Gesamtbelichtung massgebenden Endwert E eingehen. Zur Detektierung solcher Bereiche werden dabei die folgenden Kriterien angewandt:

- Die Neutraldichte aller Messpunkte des Bereichs muss einen gewissen Schwellwert überschreiten.
- Der Bereich muss zusammenhängend sein und sich bis zu einem der Ränder der Vorlage erstrecken.

Da sich sowohl Himmel- als auch Schneepartien im allg. durch geringen Detailkontrast auszeichnen, lässt sich ihre Detektierung erfindungsgemäss dadurch verbessern, dass man als zusätzliches Kriterium einführt:

- Der Detailkontrast aller Messtupel des Bereichs muss einen gewissen Schwellwert Ks (z.B. wie oben beschrieben ermittelt) unterschreiten.

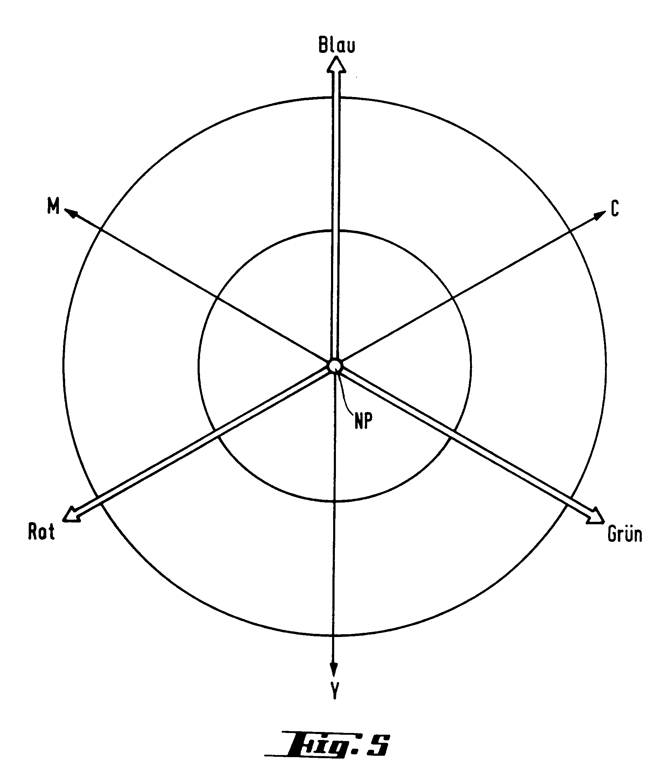

Das in den Bedienungsanleitungen zu den GRETAG Printern 3139..3142 beschriebene Farbkorrekturverfahren beruht auf der Darstellung der dreidimensionalen Messwerte (Farbdichten) in einer zweidimensionalen Farbebene (Fig. 5). Als Bezugspunkt für die Bestimmung der "Farbigkeit" eines Messpunktes wird dabei ein sog. "Neutralpunkt" verwendet, der im wesentlichen einer normal belichteten Aufnahme einer farblich neutralen Szene entspricht.

Grob gesagt besteht das Grundprinzip des Verfahrens darin, dass jeder Messwert aufgrund seiner farblichen Abweichung vom Neutralpunkt einen Beitrag zur Gesamtkorrektur liefert, und zwar mit einem relativen Gewicht Go, welches von der Lage des jeweiligen Punktes in der Farbebene abhängt. Dieses Gewicht nimmt mit zunehmender farblicher Sättigung des Messpunktes (d.h. mit zunehmendem Abstand vom Neutralpunkt) ab und ist von einer einstellbaren Schwelle an Null (damit wird erreicht, dass ausgeprägte Farbdominanten keinen Einfluss auf die Farbkorrektur haben).

Das Verfahren kann unter Einbezug der Detailkontrast-Information auf einfache Weise dadurch verbessert werden, dass man das Gewicht G für den Korrekturbeitrag eines jeden Messtupels nicht nur aufgrund seiner Lage in der Farbebene festlegt, sondern gleichzeitig auch aufgrund seines, z.B. entsprechend der Formel (V) bestimmten Detailkontrastes K, z.B. gemäss den Formeln:

$G = Go \cdot (Kmax - K)/(Kmax - Kmin)$

oder

8

$$G = 0.5 \cdot Go \cdot \left[ 1 + \frac{K_{max} - K}{K_{max} - K_{min}} \right]$$

wobei Go ($0 <=$ Go $>= 1$) das rein aufgrund der Lage des Messtupels in der Farbebene ermittelte Gewicht bedeutet und $K_{max}$ bzw. $K_{min}$ den über die Gesamtheit der Messtupel ermittelten maximalen bzw. minimalen Detailkontrastwert darstellen.

Kurz gesagt gehen Messtupel mit hohem Detailkontrast mit reduziertem Gewicht in die Berechnung der Farbkorrektur und somit der Belichtungsparameter ein. Dies wirkt sich insbesondere aus folgenden Gründen positiv aus:

Insbesondere bei farblich stark strukturierten Bildern und bei geringer oder mittlerer Scannerauflösung tritt das Problem auf, dass der Vorlagenbereich, über welchen ein Messwert gebildet wird, häufig zwei farblich verschiedene Gebiete umfasst. So ergeben sich z.B. an der Grenze zwischen einer Intensiv gefärbten Fläche ("Farbdominante") und einer neutralen Fläche der Vorlage farblich relativ schwach gesättigte Messwerte, die somit bei einer Gewichtung einzig aufgrund der Lage in der Farbebene mit einem zu hohen Gewicht Go in die Korrektur eingehen, also zu einem Farbfehler führen.

Mit dem erfindungsgemäss verbesserten Verfahren tritt dieses Problem nur noch in stark reduziertem Ausmass auf, da sich solche Grenzbereiche durch einen hohen Detailkontrast aus-zeichnen und damit mit reduziertem Gewicht G in die Berechnung eingehen.

Neonlichtaufnahmen und Aussenaufnahmen mit grüner Vegetation zeichnen sich beide durch Messwerte mit gegenüber dem Durchschnitt erhöhter Gründichte aus. Bei den gängigen Farbkorrekturverfahren stellt sich das Problem, dass selbst bei einer optimalen Einstellung der Korrekturparameter Neonlichtaufnahmen häufig zu schwach korrigiert, und demzufolge mit einem ausgeprägten Grünstich kopiert werden, während andrerseits die erwähnten Aussenaufnahmen häufig eine zu starke Korrektur erfahren und so mit einem für den Betrachter störenden Magenta-Farbstich kopiert werden. Eine Verstärkung der Farbkorrektur für Bilder mit erhöhter Gründichte geht dabei unweigerlich auf Kosten der Aussenaufnahmen mit grüner Vegetation (bewirkt dafür eine verbesserte Korrektur der Neonlichtaufnahmen), während umgekehrt eine Abschwächung der Korrektur unweigerlich auf Kosten der Neonlichtaufnahmen erfolgen würde.

Mit dem erfindungsgemäss verbesserten Verfahren löst sich dieses Dilemma weitgehend von selbst, da sich die Messtupel erhöhter Gründichte bei Aussenaufnahmen im allg. durch einen hohen Detailkontrast ("Filigrankontrast") auszeichnen, also nur in abgeschwächter Form auf die Farbkorrektur einwirken, im Gegensatz zu den Neonlicht-Innenaufnahmen, bei welchen Messtupel erhöhter Gründichte häufiger mit geringem Detailkontrast vorkommen, und somit mit relativ hohem Gewicht in die Korrektur eingehen.

Ein analoges Problem stellt bei den konventionellen Farbkorrekturverfahren die Unterscheidung zwischen Innenaufnahmen, die unter Glühlampenlicht entstanden sind, und Aussenaufnahmen, die sich rein farblich kaum von diesen unterscheiden lassen, wie z.B. die bereits erwähnten Herbstaufnahmen. Auch hier resultiert mit dem erfindungsgemässen Verfahren eine Verbesserung, wiederum aufgrund der Tatsache, dass sich die beiden Kategorien von Aufnahmen im allg. bezüglich des Filigrankontrastes unterscheiden, was wie erwünscht zu einer im Mittel stärkeren Korrektur der Glühlampenlicht-Aufnahmen führt.

**Patentansprüche**

1. Verfahren zur Steuerung der Belichtung in einem fotografischen Farbkopiergerät, wobei eine Kopiervorlage (N) in einer Vielzahl von Abtastbereichen (j) fotoelektrisch abgetastet wird, für jeden Abtastbereich aus den dabei gewonnenen Abtastwerten ein den drei Farbdurchlässigkeiten oder Farbdichten der Kopiervorlage in diesem Abtastbereich entsprechendes Messwert-Tripel ($D_{ij}$) bestimmt wird und aus den Messwert-Tripeln der einzelnen Abtastbereiche unter Berücksichtigung gegebener Kriterien die erforderlichen Kopierlichtmengen bestimmt werden, dadurch gekennzeichnet, dass für jeden Abtastbereich zusätzlich zu den Messwert-Tripeln ($D_{ij}$) wenigstens ein ein Mass für den Detailkontrast innerhalb des betreffenden Abtastbereichs bildender DetailkontrastKennwert ($K_i$) bestimmt wird und dass zusätzlich zu den Messwert-Tripeln der einzelnen Abtastbereiche ($D_{ij}$) auch die Detailkontrast-Kennwerte der Abtastbereiche bei der Bestimmung der Kopierlichtmengen in dem Sinne mitberücksichtigt werden, dass Abtastbereiche mit hohem Detailkontrast in die Berechnung der Dichtekorrektur stärker und in die Berechnung der Farbkorrektur schwächer eingehen als Abtastbereiche mit niedrigem Detailkontrast.

**2.** Verfahren nach Anspruch 1, dadurch gekennzeichnet, dass jeder Abtastbereich in einer Mehrzahl von Messpunkten abgetastet wird und dass die Detailkontrast-Kennwerte aus den Abtastwerten der Messpunkte bestimmt werden.

**3.** Verfahren nach Anspruch 2, dadurch gekennzeichnet, dass als Mass für den Detailkontrast pro Abtastbereich drei Detailfarbkontrast-Kennwerte ($K_i$) bestimmt werden gemäss der Formel

$$K_i = \underset{j\,=\,1...N}{\text{Max}(D_{ij})} - \underset{j\,=\,1...N}{\text{Min}(D_{ij})}$$

worin i für die drei Farben rot, blau und grün steht, N die Anzahl der Messpunkte eines Abtastbereichs ist und $D_{ij}$ die Dichte des j-ten Messpunkts in der Farbe i bededutet, und dass diese drei Detailfarbkontrast-Kennwerte für die Ermittlung der Kopierlichtmengen mitberücksichtigt werden.

**4.** Verfahren nach Anspruch 3, dadurch gekennzeichnet, dass als Mass für den Detailkontrast aus den drei Detailfarbkontrast-Kennwerten ($K_i$) ein kombinierter Detailkontrast-Kennwert (K) gemäss der Formel

$$K = \sum_i g_i \cdot K_i$$

bestimmt und anstelle der drei Detailfarbkontrast-Kennwerte für die Ermittlung der Kopierlichtmengen mitberücksichtigt wird, wobei i für die drei Farben rot, blau und grün steht und $g_i$ drei positive, sich zu 1 addierende Gewichtsfaktoren sind.

**5.** Verfahren nach Anspruch 3, dadurch gekennzeichnet, dass als Mass für den Detailkontrast aus den drei Detailfarbkontrast-Kennwerten ($K_i$) ein kombinierter Detailkontrast-Kennwert (K) gemäss der Formel

$$K = \text{Max}\,(K_i)$$

bestimmt und anstelle der Detailfarbkontrast-Kennwerte für die Ermittlung der Kopierlichtmengen mitberücksichtigt wird.

**6.** Verfahren nach Anspruch 2, dadurch gekennzeichnet, dass der Detailkontrast-Kennwertgemäss der Formel

$$K = \underset{j\,=\,1...N}{\text{Max}} \left( \sum_i f_i \cdot D_{ij} \right) - \underset{j\,=\,1...N}{\text{Min}} \left( \sum_i f_i \cdot D_{ij} \right)$$

bestimmt wird, worin i für die drei Farben rot, blau und grün steht, N die Zahl der Messpunkte pro Abtastbereich darstellt, $D_{ij}$ die Dichte des j-ten Messpunkts in der Farbe i bedeutet und $f_i$ drei positive, sich zu 1 addierende Gewichtsfaktoren sind.

**7.** Verfahren nach Anspruch 2, dadurch gekennzeichnet, dass der Detailkontrast-Kennwertgemäss der Formel

$$K = \underset{j=1\ldots N}{\text{Max}} \left( \left| D_{b,j} - D_{g,j} \right| + \left| D_{r,j} - D_{g,j} \right| \right)$$

bestimmt wird, worin N die Anzahl der Messpunkte pro Abtastbereich ist und $D_{b,j}$, $D_{g,j}$ und $D_{r,j}$ die Dichten des j-ten Messpunktes in den Farben blau bzw. grün bzw. rot bedeuten.

8. Verfahren nach Anspruch 2, dadurch gekennzeichnet, dass die Kopiervorlage mit hoher Auflösung punktweise abgetastet wird und die Abtastwerte der Abtastbereiche durch Zusammenfassen der Abtastwerte der Abtastpunkte eines Abtastbereichs bestimmt werden.

9. Verfahren nach Anspruch 2 oder 8, dadurch gekennzeichnet, dass die Abtastung der Kopiervorlage in einer Richtung mit grösserer Auflösung erfolgt als in Richtung quer dazu, wobei jeder Abtastbereich vorzugsweise nur eine einzige Reihe von Messpunkten umfasst.

10. Verfahren nach einem der Ansprüche 1 bis 9, dadurch gekennzeichnet, dass zur Feststellung von Himmelsbereichen oder Schneebereichen vorzugsweise zusätzlich zu den üblichen Kriterien die Detailkontrast-Kennwerte der Abtastbereiche mit einem Detailkontrast-Schwellenwert verglichen werden, und dass ein Vorlagenbereich als Himmelsbereich definiert und bei der Bestimmung der Kopierlichtmengen entsprechend berücksichtigt wird, wenn sämtliche Detailkontrast-Kennwerte der zu diesem Vorlagenbereich gehörenden Abtastbereiche unter dem genannten Detailkontrast-Schwellenwert liegen.

11. Verfahren nach Anspruch 10, dadurch gekennzeichnet, dass der Detailkontrast-Schwellenwert als Mittelwert gewählt wird zwischen dem grössten und dem kleinsten vorkommenden Detailkontrast-Kennwert.

12. Farbkopiergerät mit einer Projektionsanordnung (1,3) zum Abbilden einer Kopiervorlage (N) auf lichtempfindliches Kopiermaterial (P), mit einer Abtastanordnung (4) zum bereichsweisen fotoelektrischen Abtasten der Kopiervorlage (N) in einer Vielzahl von Abtastbereichen (j) und mit einer elektronischen Belichtungssteuerung (5), welche aus den von der Abtastanordnung (4) erzeugten Abtastwerten ($D_{ij}$) der einzelnen Abtastbereiche die erforderlichen Kopierlichtmengen bestimmt, dadurch gekennzeichnet, dass Mittel zur Bestimmung von ein Mass für den Detailkontrast innerhalb jedes einzelnen Abtastbereichs (j) bildenden Detailkontrast-Kennwerten ($K_i$) vorgesehen sind, und dass die Belichtungssteuerung bei der Bestimmung der Kopierlichtmengen zusätzlich zu den Abtastwerten der einzelnen Abtastbereiche diese Detailkontrast-Kennwerte in dem Sinne mit berücksichtigt, dass Abtastbereiche mit hohem Detailkontrast in die Berechnung der Dichtekorrektur stärker und in die Berechnung der Farbkorrektur schwächer eingehen als Abtastbereiche mit niedrigem Detailkontrast.

13. Kopiergerät nach Anspruch 12, dadurch gekennzeichnet, dass die Mittel zur Bestimmung der Detailkontrast-Kennwerte ein hochauflösendes Abtastsystem (4,10) umfassen, das die Kopiervorlage (N) im wesentlichen punktweise abtastet, wobei innerhalb eines jeden Abtastbereichs jeweils eine Mehrzahl von Abtastpunkten liegt.

## Claims

1. A method of controlling the exposure in a photographic colour copying apparatus, which comprises photoelectrically scanning a copying original (N) in a plurality of scanning regions (j), determining for each scanning region from the scan values obtained a measured triplet value ($D_{ij}$) corresponding to the three colour transmissivities or colour densities of the copying original in that scanning region, and determining the necessary quantities of copying light from the measured triplet values of the individual scanning regions taking certain given criteria into consideration, wherein for each scanning region at least one detail contrast parameter ($K_i$) representing a measure of the detail contrast within the relevant scanning region is determined in addition to the measured triplet values ($D_{ij}$) and the detail contrast parameters of the scanning regions are taken into consideration in addition to the measured triplet values of the individual scanning regions ($D_{ij}$) in the determination of the quantities of copying light in such a manner that scanning regions with a high detail contrast are considered to a greater extent in the calculation of density corrections and to a lesser extent in the calculation of colour corrections than are scanning regions with a low detail contrast.

2. A method according to claim 1, wherein each scanning region is scanned in a plurality of measuring points and the detail contrast parameters are determined from the scans values of the measuring points.

3. A method according to claim 2, wherein, as a measure of the detail contrast, three detail colour contrast parameters ($K_i$) are determined per scanning region by the formula:

$$K_i = \underset{j = 1...N}{Max(D_{ij})} - \underset{j = 1...N}{Min(D_{ij})}$$

wherein i represents the three colours red, blue and green, N is the number of measuring points in a scanning region, and $D_{ij}$ is the density of the j-th measuring point in the colour i, and those three detail colour contrast parameters are also taken into consideration in the determination of the quantities of copying light.

4. A method according to claim 3, wherein, as a measure of the detail contrast, a combined detail contrast parameter (K) is determined from the three detail colour contrast parameters ($K_i$) by the formula:

$$K = \sum_i g_i \cdot K_i$$

and is taken into consideration in place of the three detail colour contrast parameters in the determination of the quantities of copying light, wherein i represents the three colours red, blue and green and $g_i$ represents three positive weighting factors adding up to 1.

5. A method according to claim 3, wherein, as a measure of the detail contrast, a combined detail contrast parameter (K) is determined from the three detail colour contrast parameters ($K_i$) by the formula:

$$K = Max (K_i)$$

and is taken into consideration in place of the detail colour contrast parameters in the determination of the quantities of copying light.

6. A method according to claim 2, wherein the detail contrast parameter is determined by the formula:

$$K = \underset{j=1...N}{Max} \left( \sum_i f_i \cdot D_{ij} \right) - \underset{j=1...N}{Min} \left( \sum_i f_i \cdot D_{ij} \right)$$

wherein i represents the three colours red, blue and green, N is the number of measuring points per scanning region, $D_{ij}$ is the density of the j-th measuring point in the colour i and $f_i$ represents three positive weighting factors adding up to 1.

**7.** A method according to claim 2, wherein the detail contrast parameter is determined by the formula:

$$K = \max_{j=1\ldots N} \left( \left| D_{b,j} - D_{g,j} \right| + \left| D_{r,j} - D_{g,j} \right| \right)$$

wherein N is the number of measuring points per scanning region and $D_{b,j}$, $D_{g,j}$ and $D_{r,j}$ are the densities of the j-th measuring point in the colours blue, green and red, respectively.

**8.** A method according to claim 2, wherein the copying original is scanned point-by-point with a high resolution and the scan values of the scanning regions are determined by combining the scan values of the scanning points of a scanning region.

**9.** A method according to claim 2 or claim 8, wherein the scanning of the copying original is effected with a higher resolution in one direction than in a direction transverse to that direction, each scanning region preferably comprising only a single row of measuring points.

**10.** A method according to any one of claims 1 to 9, wherein, to detect areas of sky or snow, preferably in addition to usual criteria, the detail contrast parameters of the scanning regions are compared with a detail contrast threshold value, and a portion of the original is defined as an area of sky and taken into consideration accordingly in the determination of the quantities of copying light if all of the detail contrast parameters of the scanning regions belonging to that portion of the original are below said detail contrast threshold.

**11.** A method according to claim 10, wherein the detail contrast threshold is chosen as an average value between the largest and the smallest detail contrast parameters found.

**12.** Colour copying apparatus comprising a projection arrangement (1, 3) for the imaging of a copying original (N) on photosensitive copying material (P), a scanning arrangement (4) for the photoelectric scanning of the copying original (N) by regions in a plurality of scanning regions (j), and an electronic exposure control (5) which determines the necessary quantities of copying light from the scanning values ($D_{ij}$) of the individual scanning regions produced by the scanning arrangement (4), wherein means are provided for determining detail contrast parameters ($K_i$) representing a measure of the detail contrast within each individual scanning region (j), and the exposure control takes those detail contrast parameters into consideration, in addition to the scan values of the individual scanning regions, in the determination of the quantities of copying light in such a manner that scanning regions with a high detail contrast are considered to a greater extent in the calculation of density corrections and to a lesser extent in the calculation of colour corrections than are scanning regions with a low detail contrast.

**13.** Copying apparatus according to claim 12, wherein the means for determining the detail contrast parameters include a high resolution scanning system (4, 10) which scans the copying original (N) essentially point-by-point, a plurality of scanning points being located within each scanning region.

**Revendications**

**1.** Procédé pour commander l'exposition dans un appareil photographique à copier en couleurs, selon lequel un original à copier (N) est exploré par voie photoélectrique en un grand nombre de zones d'exploration (j), un triplet de valeurs mesurées ($D_{ij}$), correspondant aux trois transmissions de couleurs ou densités de couleurs de l'original à copier dans cette zone d'exploration, est déterminé pour chaque zone d'exploration à partir des valeurs d'exploration ainsi obtenues et les quantités de lumière de reproduction nécessaires sont déterminées à partir des triplets de valeurs mesurées des différentes zones d'exploration, avec prise en compte de critères donnés, caractérisé en ce que, pour chaque zone d'exploration, est déterminée, en plus des triplets de valeurs mesurées ($D_{ij}$), au moins une valeur caractéristique de contraste de détails ($K_i$),représentant une mesure du contraste de détails à l'intérieur de la zone d'exploration concernée, et que, en plus des triplets de valeurs mesurées des différentes

zones d'exploration ($D_{ij}$), il est également tenu compte des valeurs caractéristiques des contrastes de détails des zones d'exploration dans la détermination des quantités de lumière de reproduction, en ce sens que les zones d'exploration à haut contraste de détails entrent plus fortement dans le calcul de la correction de densité et plus faiblement dans le calcul de la correction de couleur que les zones d'exploration à faible contraste de détails.

2. Procédé selon la revendication 1, caractérisé en ce que chaque zone d'exploration est explorée en un grand nombre de points de mesure et que les valeurs caractéristiques des contrastes de détails sont déterminées à partir des valeurs d'exploration des points de mesure.

3. Procédé selon la revendication 2, caractérisé en ce que, comme mesure pour le contraste de détails par zone d'exploration, trois valeurs caractéristiques de contrastes de détails de couleurs ($K_i$) sont déterminées, selon la formule

$$K_i = \text{Max}(D_{ij}) \; -- \; \text{Min}(D_{ij})$$
$$j = 1...N \quad j = 1...N$$

où i représente les trois couleurs rouge, bleu et vert, N est le nombre de points de mesure d'une zone d'exploration et $D_{ij}$ signifie la densité du j-ième point de mesure dans la couleur i, et qu'il est également tenu compte de ces trois valeurs caractéristiques de contrastes de détails de couleurs pour la détermination des quantités de lumière de reproduction.

4. Procédé selon la revendication 3, caractérisé en ce qu'une valeur caractéristique combinée de contraste de détails (K) est déterminée comme mesure pour le contraste de détails à partir des trois valeurs caractéristiques de contrastes de détails de couleurs ($K_i$), selon la formule

$$K = \sum_i g_i \cdot K_i$$

et qu'il est tenu compte de cette valeur caractéristique combinée à la place des trois valeurs caractéristiques de contrastes de détails de couleurs pour la détermination des quantités de lumière de reproduction, i représentant les trois couleurs rouge, bleu et vert et $g_i$ désignant trois facteurs de pondération positifs qui s'additionnent pour donner 1.

5. Procédé selon la revendication 3, caractérisé en ce qu'une valeur caractéristique combinée de contraste de détails (K) est déterminée comme mesure pour le contraste de détails à partir des trois valeurs caractéristiques de contrastes de détails de couleurs ($K_i$), selon la formule

K = Max ($K_i$)

et qu'il est tenu compte de cette valeur caractéristique combinée à la place des valeurs caractéristiques de contrastes de détails de couleurs pour la détermination des quantités de lumière de reproduction.

6. Procédé selon la revendication 2, caractérisé en ce qu'il comprend la détermination de la valeur caractéristique de contraste de détails selon la formule

$$K = \max_{j=1...N} \left( \sum_i f_i \cdot D_{ij} \right) - \min_{j=1...N} \left( \sum f_i \cdot D_{ij} \right)$$

où i représente les trois couleurs rouge, bleu et vert, N représente le nombre de points de mesure par zone d'exploration, $D_{ij}$ signifie la densité du j-ième point de mesure dans la couleur i et $f_i$ désigne trois facteurs de pondération positifs qui s'additionnent pour donner 1.

**7.** Procédé selon la revendication 2, caractérisé en ce qu'il comprend la détermination de la valeur caractéristique de contraste de détails selon la formule

$$K = \max_{j=1...N} \left( \left| D_{b,j} - D_{g,j} \right| + \left| D_{r,j} - D_{g,j} \right| \right)$$

où N est le nombre de points de mesure par zone d'exploration et $D_{b,j}$, $D_{g,j}$ et $D_{r,j}$ signifient les densités du j-ième point de mesure respectivement dans les couleurs bleu, vert et rouge.

**8.** Procédé selon la revendication 2, caractérisé en ce que l'original à copier est exploré point par point avec une haute résolution et les valeurs d'exploration des zones d'exploration sont déterminées par rassemblement des valeurs d'exploration des points d'exploration d'une zone d'exploration.

**9.** Procédé selon la revendication 2 ou 8, caractérisé en ce que l'exploration de l'original à copier s'effectue avec une plus grande résolution dans une direction que dans la direction transversale à elle, chaque zone d'exploration comprenant de préférence seulement une rangée de points de mesure.

**10.** Procédé selon une des revendications 1 à 9, caractérisé en ce que, pour la détermination de zones de ciel ou de zones de neige, les valeurs caractéristiques des contrastes de détails des zones d'exploration sont comparées de préférence avec un seuil de contraste de détails, en plus de l'application des critères habituels, et qu'une zone d'original est définie comme zone de ciel et qu'il en est tenu compte en conséquence dans la détermination des quantités de lumière de reproduction, lorsque toutes les valeurs caractéristiques des contrastes de détails des zones d'exploration appartenant à cette zone de l'original sont inférieures au seuil de contraste de détails mentionné.

**11.** Procédé selon la revendication 10, caractérisé en ce que la valeur moyenne entre la plus grande valeur caractéristique de contraste de détails existante et la plus petite valeur caractéristique de contraste de détails existante est choisie comme seuil de contraste de détails.

**12.** Appareil à copier en couleurs comprenant un dispositif de projection (1, 3) pour reproduire un original à copier (N) sur du matériau de tirage photosensible (P), un dispositif d'exploration (4) pour explorer zone par zone l'original à copier (N), par voie photoélectrique, en un grand nombre de zones d'exploration (j), ainsi qu'une commande électronique d'exposition (5) qui détermine les quantités de lumière de reproduction nécessaires à partir des valeurs d'exploration ($D_{ij}$) des différentes zones d'exploration générées par le dispositif d'exploration (4), caractérisé en ce que des moyens sont prévus pour déterminer des valeurs caractéristiques de contrastes de détails ($K_i$), représentant une mesure du contraste de détails à l'intérieur de chaque zone d'exploration (j) individuelle, et que la commande d'exposition tient compte, dans la détermination des quantités de lumière de reproduction, en plus des valeurs d'exploration des différentes zones d'exploration, de ces valeurs caractéristiques de contrastes de détails, en ce sens que les zones d'exploration à haut contraste de détails entrent plus fortement dans le calcul de la correction de densité et plus faiblement dans le calcul de la correction de couleur que des zones d'exploration à faible contraste de détails.

15

**13.** Appareil à copier selon la revendication 12, caractérisé en ce que les moyens pour déterminer les valeurs caractéristiques des contrastes de détails comprennent un système d'exploration (4, 10) à haute résolution, qui explore l'original à copier (N) essentiellement point par point, chaque zone d'exploration contenant une pluralité de points d'exploration.

*Fig. 1*

**Fig. 2**

Fig. 3

EP 0 360 751 B1

Fig. 4

20

Fig. 5

**Fig. 6**